# EUROPEAN PATENT SPECIFICATION

(11) **EP 0 257 145 B1**
(45) Date of publication and mention of the grant of the patent: **12.05.1993**
(21) Application number: 86306211.3
(22) Date of filing: 11.08.1986
(51) Int. Cl.: B60T 15/04

(54) **Manually operable control valves**
Handbetätigtes Regelventil
Valve de commande manuelle

(43) Date of publication of application: 02.03.1988
(73) Proprietor: BENDIX LIMITED, Kingswood, Bristol BS15 2NL (GB)
(72) Inventor: Turner, Alan Reginald, Bath BA1 5TL (GB)
(74) Representative: Turner, Alan Reginald

(56) References cited:
- EP-A- 0 068 723
- EP-A- 0 171 569
- GB-A- 1 097 400

## Description

This invention relates to manually operable control valves and relates especially but not exclusively to control valves for vehicle compressed air braking systems.

In compressed air braking systems for heavy vehicles, it is customary, in addition to a foot operable control valve for operation of service brakes, also to provide a manually operable control valve device for operating secondary and/or parking brakes. Such a control valve device may be a single valve, or alternatively, may comprise one valve for controlling spring brakes and one valve for providing graduable secondary control. The valve assembly may include a control member moveable from a first brakes released position through a control range to a full secondary brake position and beyond that to a special parking brake position. For security purposes it is normal to provide a spring-biassed manually releaseable locking element which is engageable in the housing in the parked position. Despite the provision of the mentioned locking element a shortcoming of such a control valve assembly may exist to the extent that vibration or inadvertent knocking of the control member may cause undesired release of the locking element and result in unsafe release of the parking brake when a driver is not in a position to properly control the vehicle.

One prior art control valve mechanism which is disclosed in the Specification EP-A-0171569 includes an angularly manually operable control member carrying a slideable locking element which is urged by a spring bias towards one of two predetermined positions of locking engagement with the valve housing and a manually operable release means for overcoming the bias and lifting the locking element out of the said locking engagement.

In another prior art control mechanism which is disclosed in the Specification of EP-A-0068723 a manually operable lever locking mechanism includes an outwardly biassed locking element slideable on the lever is lockingly engageable with the housing in a predetermined position such engagement being effected by the abutting action of an inwardly biassed release member the inward bias being such as to overcome the outward bias.

In the latter mechanism the locking element is releasable when sliding movement of the release member is accompanied also by angular movement to release the frictional locking forces acting between the locking element and the housing. A possibility of inadvertent release by a single movement of the release member is thereby lessened. However, it is observed that correct operation is to some extent dependent upon the relative values of the spring biasses and these are therefore to some extent critical. Loss for example of the inward bias may allow a single action, namely the said angular movement, to effect the release.

The object of the present invention is to provide an improved mechanism wherein the above shortcomings are reduced or overcome and thereby further lessen the possibility of inadvertent release.

According to the present invention there is provided a manually operable control valve mechanism having a valve assembly in a housing operable by a control member, said control member being provided with a locking element lockingly engageable with part of the housing in a predetermined position of the control member and first bias means normally forward biasing the locking element in a direction to maintain such engagement and means whereby actuation of a release member in a given manner is operable to overcome said first bias means and including a reverse spring bias means the force of which acts in a sense to effect disengagement of the locking element from the housing part conditional upon the control member being additionally moved in another manner to release frictional or retention means otherwise retaining said element in locking engagement with said part and characterised by said reverse bias means being located between the release member and the locking element such that the force of the reverse bias means which is applied to the locking element increases by actuation of the release member in said given manner.

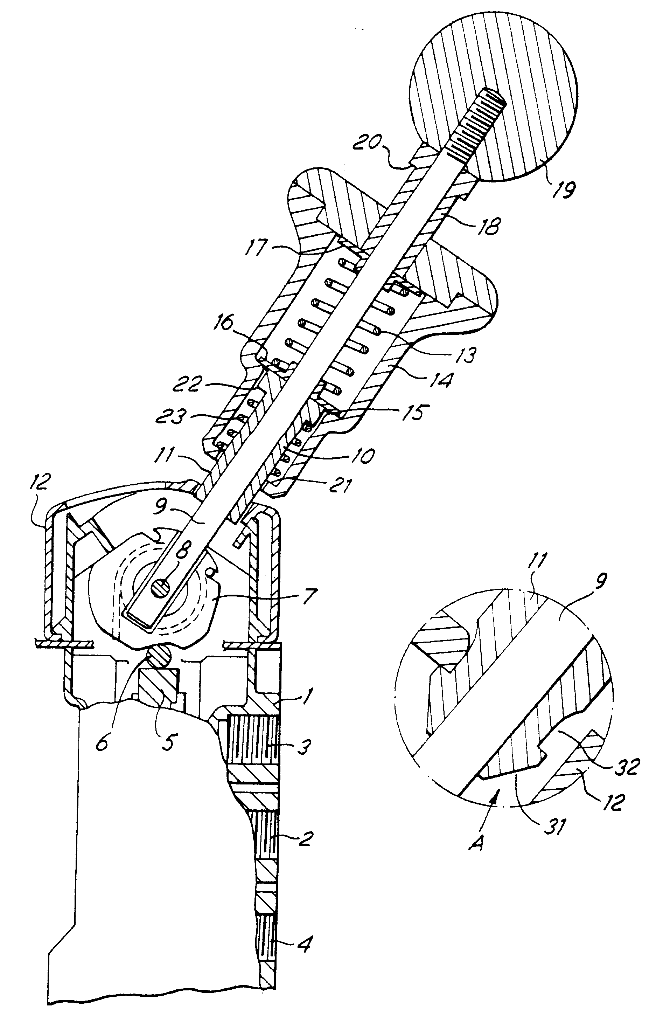

In order that the invention may be more clearly understood and readily carried into effect the same will be further described by way of example with reference to the accompanying drawing which illustrates an embodiment of the invention.

Referring to the drawing the manually operable control valve mechanism shown therein is intended to be used in controlling secondary and/or parking brakes of a heavy vehicle fitted with a multi-circuit compressed air braking system. The mechanism has a housing 1 provided with an input port 2 for connecting to a compressed air supply reservoir, an output port 3 for connecting to a control line for secondary or parking brake actuators of the vehicle and a vent port 4. A self-lapping valve assembly (not shown) is operable by a cylindrical plunger 5 axially guided in the housing and actuable via a roller 6 by a cam 7 pivotted at 8 transversly with the plunger axis. The roller 6 is guided for movement in line with said axis by means such as is described for example in the Specification of copending British Application No. 8214144. The mentioned self-lapping valve is operable to connect the output port 3 alternatively to the input port 2 or to the vent port 4 to produce graduable air pressure at port 3 dependent upon the position of the plunger 5 as set by the cam 7.

The cam 7 which is biassed clockwise by a return spring (which is not shown) is rotatable about axis 8 by a control member in the form of a lever 9 which engages with the cam and is guided in a gate assembly 12 on the top of the housing. The lever 9 is provided with a locking element 10 which is slideable along the lever 9, the lower end 11 of 10 being movable into and out of engagement with the gate assembly 12. In the position shown the locking element 10 is shown as engaged with the gate assembly in a predetermined position which will normally be the parking position of the gate lever. The locking element 10 is urged into such locking engagement by means of a captive spring 13 retained in a release member 14 in the form of a moulded plastics assembly which is also slideable on the lever 9. The spring 13 is located between a lower washer 16 which rests against a shoulder 15 within the member 14 and a washer 17 which rests against a tubular collar and stop element 18 retained on the lever 9 by a screwed-on control knob 19. The collar 18 has a flange at 20 to act as a stop for the member 14 when moved upwards. The member 14 has a further lower shoulder indicated by reference 21 between which and a upper shoulder 22 of the locking member 11 there is a lighter spring 23 which in the position shown is designed to be uncompressed.

In operation of the valve assembly, the position shown is intended to be the parked position wherein if the valve is controlling spring brakes, the output at port 3 will be vented. In order to move the lever out of this parked position it is necessary for the vehicle driver first to pull upwards the release member 14 against the stop 20. By so doing the downward bias on the locking element 11 is removed and replaced by an upward bias introduced by some compression of the spring 23 which now acts on the upper flange 22 of element 11. However, by virtue of the return spring action tending to move lever 9 away from the position shown, there is sufficient friction acting against the gate assembly and the element 11 to prevent 11 moving out of locking engagement therewith until the lever 9 is moved against the rotational spring bias. By such movement the frictional forces are removed and the spring 23 is effective to lift the element 11 out of the locking engagement. By releasing the member 14 the spring 13 again becomes effective to urge the element 11 in a locking direction such that it will engage with the gate assembly when the lever 9 is placed in the predetermined position.

As an alternative to placing reliance on friction between the lower end of element 11 and the gate assembly these may be designed to provide a positive latching function. One possibility for this is shown enlarged at inset A, wherein the lower end of 11 is shamfered at 31 and provided with an annular groove 32 whereby it locks into engagement with the gate assembly under the action of spring 13 and is only releaseable following slight clockwise rotation of the lever 9 and upward movement of the release member.

By arranging the reverse bias means of the control mechanism to act in accordance with the invention between respective opposing faces, which may typically be provided by flanges, of the release member and the locking element, the force of the reverse bias means is increasingly introduced on the actuation of the release member. Furthermore since the force of the reverse bias can be arranged normally to be zero or near zero it normally exerts virtually no force on the locking member in a releasing direction so that the valve mechanism can be mechanically inherently safe.

## Claims

1. A manually operable control valve mechanism having a valve assembly in a housing (1) operable by a control lever (9), said control lever (9) being provided with a locking element (10) lockingly engageable with a gate assembly (12) of the housing in a predetermined position of the control lever (9) and first spring bias means 13) normally forward biasing the locking element (10) in a direction to maintain such engagement and means whereby actuation of a release member (14) in a given manner is operable to overcome said first spring bias means (13) and including a reverse spring bias means (23) the force of which acts in a sense to effect disengagement of the locking element (10) from the gate assembly (12) conditional upon the control member (9) being additionally moved in another manner to release frictional or latching retention means (inset 'A') otherwise retaining said element (10) in locking engagement with said part (12) and characterised by said reverse spring bias means (23) being located to act between the release member (14) and the locking element (10) such that the force of the reverse spring bias means (23) which is applied to the locking element (10) increases by actuation of the release member (14) in said given manner.

2. A manually operable control valve mechanism as claimed in claim 1, wherein the locking element (10) is slideable on said control lever (9) into and out of engagement with the housing part (12), characterised by the release member (14) being slideable along said lever relative to the locking element (10) and the reverse spring bias means (23) comprising a normally substantially unloaded spring (23).

3. A manually operable control valve mechanism as claimed in claim 1 or 2 characterised by said release member (14) normally being biased towards a locking position by virtue of the first spring (13) being captive between the release member (14) and means (16) slideable on the lever and cooperable with the locking element (10).

4. A manually operable control valve mechanism as claimed in claim 3, characterised by said means (16) being engageable with a stop (15) inside the release member (14).

5. A manually operable control valve mechanism as claimed in claim 1, 2, 3 or 4 characterised by catch means (31, 32) between the locking element (10) and the housing part (12) whereby the control lever (9) is required to be moved through a predetermined angle in relation to the housing part (12) to permit release.

## Patentansprüche

1. Von Hand betätigbarer Steuerventilmechanismus, der eine Ventilanordnung in einem Gehäuse (1) hat, die durch einen Kontroll- bzw. Steuerhebel (9) betätigbar ist, der mit einem Verriegelungselement (10) versehen ist, welches mit einem Kulissengebilde (12) des Gehäuses in einer vorbestimmten Position des Steuerhebels (9) verriegelnd in Eingriff treten kann, wobei eine erste Federvorspanneinrichtung (13) vorgesehen ist, welche gewöhnlich das Verriegelungselement (10) in einer Richtung vorwärts vorspannt, daß ein solcher Eingriff aufrechterhalten wird, und wobei Mittel vorgesehen sind, durch welche Betätigung eines Freigabeteils (14) in einer gegebenen Weise derart ausführbar ist, daß die erste Federvorspanneinrichtung (13) überwunden wird, und diese Mittel eine Rückwärtsfedervorspanneinrichtung (23) umfassen, deren Kraft in einem Sinn wirkt, das Verriegelungselement (10) außer Eingriff mit dem Kulissengebilde (12) zu bringen, vorausgesetzt, daß der Steuerhebel (9) zusätzlich in einer anderen Weise bewegt wird, um eine mit Reibung oder Verriegelung arbeitende Rückhalteeinrichtung freizugeben, die sonst das Element (10) in Verriegelungseingriff mit dem genannten Teil (12) hält,
**dadurch gekennzeichnet,** daß die Rückwärtsfedervorspanneinrichtung (23) so angeordnet ist, daß sie zwischen dem Freigabeteil (14) und dem Verriegelungselement (10) derart wirkt, daß die Kraft der Rückwärtsfedervorspanneinrichtung (23), die an das Verriegelungselement (10) angelegt wird, sich durch Betätigung des Freigabeteils (14) in der genannten gegebenen Weise erhöht.

2. Von Hand betätigbarer Steuerventilmechanismus nach Anspruch 1, wobei das Verriegelungselement (10) an dem Steuerhebel (9) in und außer Eingriff mit dem Gehäuseteil (12) verschiebbar ist, dadurch gekennzeichnet, daß der Freigabeteil (14) entlang des Hebels relativ zu dem Verriegelungselement (10) verschiebbar ist und die Rückwärtsfedervorspanneinrichtung (23) eine gewöhnlich im wesentlichen entspannte Feder (23) aufweist.

3. Von Hand betätigbarer Steuerventilmechanismus nach Anspruch 1 oder 2, dadurch gekennzeichnet, daß der Freigabeteil (14) gewöhnlich in Richtung gegen eine Verriegelungsposition vorgespannt ist dadurch, daß die erste Feder (13) zwischen dem Freigabeteil (14) und einer Einrichtung (16) gehalten ist, die an dem Hebel verschiebbar ist und mit dem Verriegelungselement (16) zusammenarbeiten kann.

4. Von Hand betätigbarer Steuerventilmechanismus nach Anspruch 3, dadurch gekennzeichnet, daß die genannte Einrichtung (16) mit einem Anschlag (15) auf der Innenseite des Freigabeteils (14) in Eingriff bringbar ist.

5. Von Hand betätigbarer Steuerventilmechanismus nach Anspruch 1, 2, 3 oder 4, gekennzeichnet durch eine Fangeinrichtung (31,32) zwischen dem Verriegelungselement (10) und dem Gehäuseteil (12), wodurch der Steuerhebel (9) über einen vorbestimmten Winkel in Relation zu dem Gehäuseteil (12) bewegt werden muß, um eine Freigabe zu ermöglichen.

## Revendications

1. Mécanisme de soupape de commande à actionnement manuel comportant un ensemble à soupape situé dans un boîtier (1) et pouvant être actionné par un levier de commande (9), ledit levier de commande (9) comportant :
un élément de verrouillage (10) apte à s'engager, en réalisant un verrouillage, dans un ensemble de porte (12) du boîtier, pour une position prédéterminée du levier de commande (9),
un premier moyen de sollicitation à ressort (13) repoussant normalement l'élément de verrouillage (10) vers l'avant en vue de maintenir un tel engagement,
et des moyens, grâce auxquels l'actionnement d'un élément de libération (14) d'une manière déterminée permet de surmonter la force dudit premier moyen de sollicitation à ressort (13), ces moyens comprenant un moyen de sollicitation inverse à ressort (23), dont la force agit de manière à dégager l'élément de verrouillage (10) de l'ensemble de porte (12) à la condition que le levier de commande (9) soit déplacé de façon additionnelle d'une autre manière pour libérer un moyen de frottement ou de maintien du verrouillage (encart A), alors que, sinon, il maintient ledit élément (10) à l'état engagé, qui réalise le verrouillage, dans ledit ensemble de porte (12),
caractérisé en ce que ledit moyen de sollicitation inverse à ressort (23) est positionné de manière à agir entre l'élément de libération (14) et l'élément de verrouillage (10) de telle sorte que la force de ce moyen de sollicitation inverse à ressort (23), qui est appliquée à l'élément de verrouillage (10), augmente lors de l'actionnement de l'élément de libération (14), de ladite manière indiquée.

2. Mécanisme de soupape de commande à actionnement manuel selon la revendication 1, dans lequel l'élément de verrouillage (10) peut glisser sur ledit levier de commande (9) pour s'appliquer contre l'ensemble de porte (12) du boîtier et s'en écarter,
caractérisé en ce que l'élément de libération (14) peut glisser le long dudit levier par rapport à l'élément de verrouillage (10) et que le moyen de sollicitation inverse à ressort (23) comprend un ressort (23) qui normalement n'est essentiellement pas placé sous contrainte.

3. Mécanisme de soupape de commande à actionnement manuel selon la revendication 1 ou 2, caractérisé en ce que ledit élément de libération (14) est normalement sollicité en direction d'une position de verrouillage sous l'action du premier ressort (13) qui est retenu captif entre l'élément de libération (14) et un moyen (16) apte à glisser sur le levier et apte à coopérer avec l'élément de verrouillage (10).

4. Mécanisme de soupape de commande à actionnement manuel selon la revendication 3, caractérisé en ce que ledit moyen (16) peut s'appliquer contre une butée (15) à l'intérieur de l'élément de libération (14).

5. Mécanisme de soupape de commande à actionnement manuel selon la revendication 1,2,3 ou 4, caractérisé par un moyen d'accrochage (31,32) situé entre l'élément de verrouillage (10) et la partie (12) du boîtier, ce qui a pour effet que le levier de commande (9) doit se déplacer sur l'angle prédéterminé par rapport à la partie (12) du boîtier pour permettre la libération.
